# EUROPEAN PATENT APPLICATION

(11) **EP 3 125 474 A1**
(43) Date of publication of application: **01.02.2017**
(21) Application number: 16177159.7
(22) Date of filing: 30.06.2016
(51) Int. Cl.: H04L 12/58, H04W 4/12

(54) **METHOD, DEVICE AND COMPUTER PROGRAM FOR PROCESSING SHORT MESSAGES**

(30) Priority: 31.07.2015 CN 201510463529
(71) Applicant: Xiaomi Inc., Beijing 100085 (CN)
(72) Inventor: QIN, Qiuping, Haidian District, Beijing 100085 (CN); WANG, Baichao, Haidian District, Beijing 100085 (CN); ZHANG, Tao, Haidian District, Beijing 100085 (CN)
(74) Representative: Hughes, Andrea Michelle

(57) **Abstract**

The present disclosure provides a method and device for processing a short message, and relates to field of communication technologies. The method includes: receiving (101, 202, 305, 401) a short message; determining (102) latest contents of concern to a user; checking (103, 205, 308, 406) whether contents of the short message contain the latest contents of concern to the user; and when the contents of the short message do not contain the latest contents of concern to the user, intercepting (104, 206, 309, 407) the short message as a spam message.

## Description

### TECHNICAL FIELD

The present disclosure relates to the field of communication technologies, and more particularly, to a method and a device for processing a short message.

### BACKGROUND

Spam messages refer to those short messages which are sent to a mobile phone or other terminals of a user without permission of the user and are not preferred to be received by the user. At present, recognizing and intercepting the spam messages have become necessary functions of the mobile phone.

Related art provides a method for short message interception. The method includes a step of using a pre-established classifier to distinguish whether a short message is a spam message after the short message is received. The classifier is acquired on the basis of short message sample training. The short message samples may be a certain number of normal short messages and spam messages picked out from short messages received by the user.

In the process of achieving the present disclosure, it is found that the related art at least has the following defects: the classifier distinguishes the spam messages on the basis of the short message samples, in this case, if the user cannot update the short message samples timely, then the classifier will mistakenly treat the short messages which are unnecessary for the user as normal short messages.

### SUMMARY

In order to solve the technical problem that the classifier mistakenly treats the short messages which are unnecessary for the user as normal short messages, the present disclosure provides a method and a device for processing a short message. The technical solutions are as follows. According to a first aspect of embodiments of the present disclosure, there is provided a method for processing a short message, including:
receiving a short message;
determining latest contents of concern toof concern to a user;
checking whether contents of the short message contain the latest contents of concern toof concern to the user; and
when the contents of the short message do not contain the latest contents of concern toof concern to the user, intercepting the short message as a spam message.

In a first implementation manner of the first aspect, the latest contents of of concern to to the user are newly set by the user, or acquired according to newly collected user information, wherein the user information is collected and acquired from a terminal device receiving the short message.

In a second implementation manner of the first aspect, the determining the latest contents of concern toof concern to the user includes:
acquiring user information collected within a predetermined duration before time of receiving the short message; and
analyzing the user information collected within the predetermined duration before the time of receiving the short message to acquire the latest contents of concern to the user.

In a third implementation manner of the first aspect, the determining the latest contents of concern to the user includes:
acquiring user information within a valid time, the start time of the valid time of the user information being the time of collecting the user information, and the duration of the valid time of the user information being an effective duration corresponding to an information category of the user information in a pre-established corresponding relationship between the information category and the effective duration; and
analyzing the user information within the valid time to acquire the latest contents of concern to the user.

In a fourth implementation manner of the first aspect, the method further includes:
collecting the user information, the user information including at least one of position information of the terminal device, information inputted on the terminal device and usage information of an application installed on the terminal device.

In a fifth implementation manner of the first aspect, the usage information of the application installed on the terminal device includes a name of the used application and search information corresponding to a webpage opened in the application.

In a sixth implementation manner of the first aspect, the checking whether the contents of the short message contain the latest contents of concern to the user includes:
judging whether a number from which the short message is sent is a number stored in a contact list of the terminal device receiving the short message; and
when the number from which the short message is sent is not a number stored in the contact list of the terminal device, checking whether the contents of the short message contain the latest contents of concern to the user.

In a seventh implementation manner of the first aspect, the checking whether the contents of the short message contain the latest contents of concern to the user includes: when the number from which the short message is sent is not the number stored in the contact list of the terminal device, judging whether the number by which the short message is sent is in a whitelist; and
when the number by which the short message is sent is not in the whitelist, checking whether the contents of the short message contain the latest contents of concern to the user.

In an eighth implementation manner of the first aspect, the checking whether the contents of the short message contain the latest contents of concern to the user includes: when the number from which the short message is sent is not in the whitelist, distinguishing the short message using a text categorization method; and when the short message is distinguished as a spam message, checking whether the contents of the short message contain the latest contents of concern to the user. According to a second aspect of embodiments of the present disclosure, there is provided a device for processing a short message, including:
a receiving module configured to receive a short message;
a determination module configured to determine latest contents of concern to a user;
a checking module configured to check whether contents of the short message contain the latest contents of concern to the user; and
an interception module configured to, when the contents of the short message do not contain the latest contents of concern to the user, intercept the short message as a spam message.

In a first implementation manner of the second aspect, the latest contents of concern to the user which are determined by the determination module are newly set by the user, or acquired according to newly collected user information, wherein the user information is collected and acquired from a terminal device receiving the short message.

In a second implementation manner of the second aspect, the determination module is configured to:
acquire user information collected within a predetermined duration before the time of receiving the short message; and
analyze the user information collected within the predetermined duration before the time of receiving the short message to acquire the latest contents of concern to the user.

In a third implementation manner of the second aspect, the determination module is configured to:
acquire user information within a valid time, the start time of the valid time of the user information being the time of collecting the user information, and the duration of the valid time of the user information being an effective duration corresponding to an information category of the user information in a pre-established corresponding relationship between the information category and the effective duration; and
analyze the user information within the valid time to acquire the latest contents of concern to the user.

In a fourth implementation manner of the second aspect, the device further includes a collection module,
the collection module being configured to collect the collection module, and the user information including at least one of position information of the terminal device, information inputted on the terminal device and usage information of an application installed on the terminal device.

In a fifth implementation manner of the second aspect, the usage information of the application installed on the terminal device includes the name of the used application and search information corresponding to a webpage opened in the application.

In a sixth implementation manner of the second aspect, the checking module includes:
a judgment submodule configured to judge whether a number by which the short message is sent is a number stored in a contact list of the terminal device receiving the short message; and
a checking submodule configured to, when the number by which the short message is sent is not the number stored in the contact list of the terminal device, check whether the contents of the short message contain the latest contents of concern to the user.

In a seventh implementation manner of the second aspect, the checking submodule is configured to:
when the number by which the short message is sent is not the number stored in the contact list of the terminal device, judge whether the number by which the short message is sent is in a whitelist; and
when the number by which the short message is sent is not in the whitelist, check whether the contents of the short message contain the latest contents of concern to the user.

In an eighth implementation manner of the second aspect, the checking submodule is configured to:
when the number by which the short message is sent is not the number stored in the contact list of the terminal device, judge whether the number by which the short message is sent is in a whitelist;
when the number by which the short message is sent is not in the whitelist, distinguish the short message using a text categorization device; and
when the short message is distinguished as a spam message, check whether the contents of the short message contain the latest contents of concern to the user.

According to a third aspect of embodiments of the present disclosure, there is provided a device for processing a short message, including:
a communication component configured to receive a short message;
a processor; and
a memory for storing instructions executable by the processor;
wherein the processor is configured to:
   determine latest contents of concern to a user;
   check whether contents of the short message contain the latest contents of concern to the user; and
   when the contents of the short message do not contain the latest contents of concern to the user, intercept the short message as a spam message.

The present invention also provides a computer program, which when executing on a processor of a terminal device, performs the above method.

The technical solutions provided by embodiments of the present disclosure have the following beneficial effects: the short message is received, the latest contents of concern to the user are determined, the contents of the short message are checked whether to contain the latest contents of concern to the user, and when the contents of the short message do not contain the latest contents of concern to the user, the short message is intercepted as the spam message; in this way, whether the short message is a spam message can be determined according to the latest contents of concern to the user, so that the determination effect is more accurate, treating short messages which are unnecessary for the user as normal short messages can be avoided, and the service quality of a terminal device supplier is improved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for processing a short message, according to an exemplary embodiment.
Fig. 2 is a flow chart of another method for processing a short message, according to an exemplary embodiment.
Fig. 3 is a flow chart of another method for processing a short message, according to an exemplary embodiment.
Fig. 4 is a flow chart of still another method for processing a short message, according to an exemplary embodiment.
Fig. 5 is a block diagram illustrating a device for processing a short message, according to an exemplary embodiment.
Fig. 6 is a block diagram illustrating another device for processing a short message, according to an exemplary embodiment.
Fig. 7 is a block diagram illustrating another device for processing a short message, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

In the foregoing method of using the classifier to distinguish spam messages provided by the related art, the classifier is acquired on the basis of short message sample training, and the short message samples may be a certain number of normal short messages and spam messages picked out from the short messages received by the user. Thus, the user needs to pick out a certain quantity of short message samples under the premise of a certain accumulation of short messages, which requires a certain waiting time. Meanwhile, the distinguishing criteria of the user at different time will be different. For instance, when the user is preparing to purchase a car, he/she may use a car purchasing application and receive such short messages like car model and price sent by the car purchasing application, these short messages are normal short messages for the user. However, after the user has purchased a car, the car purchasing application will not be used again for a very long time, then short messages sent by the car purchasing application should be spam messages. However, because picking out short message samples will involve a certain waiting time, the short message samples cannot be updated timely, which will cause the classifier to mistakenly treat the short messages unnecessary for the user as normal short messages. To solve this problem, embodiments of the present disclosure provide a method and a device for processing a short message. In embodiments of the present disclosure, a terminal device may be a terminal having a short message receiving function, for example, the terminal device may be a mobile phone, or a smart terminal having a mobile phone function, or a smart terminal having a short message synchronizing function. The short message synchronizing function may refer to: after receiving a short message, the smart terminal having the short message receiving function sends the short message to a synchronization server, then the synchronization server sends the short message to a designated smart terminal, the designated smart terminal is namely the smart terminal having the short message synchronizing function. The smart terminal may include a smart watch, a tablet and a laptop computer.

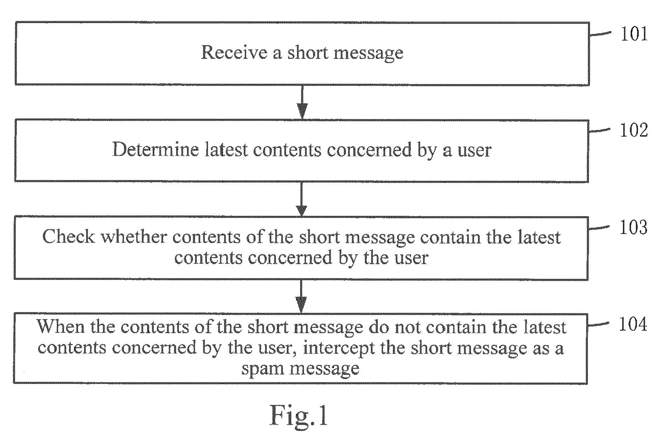

Fig. 1 is a method for processing a short message according to an exemplary embodiment, which is applicable to a terminal device. Referring to Fig. 1, the method includes the following steps.

In step S101, a short message is received.

In step S102, latest contents of concern to the user are determined.

The contents of concern to the user may be information interesting to the user.

After receiving the short message, the latest contents of concern to the user are determined.

In a first implementation manner, the latest contents of concern to the user may be the concerned contents newly set by the user. For instance, the concerned contents inputted by the user are received in real time, and the concerned contents newly inputted by the user are taken as the latest contents of concern to the user at the current time.

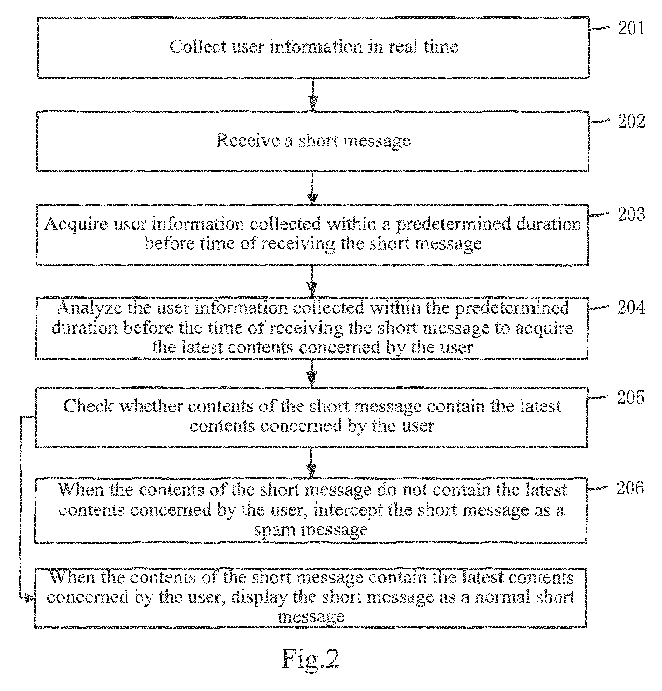

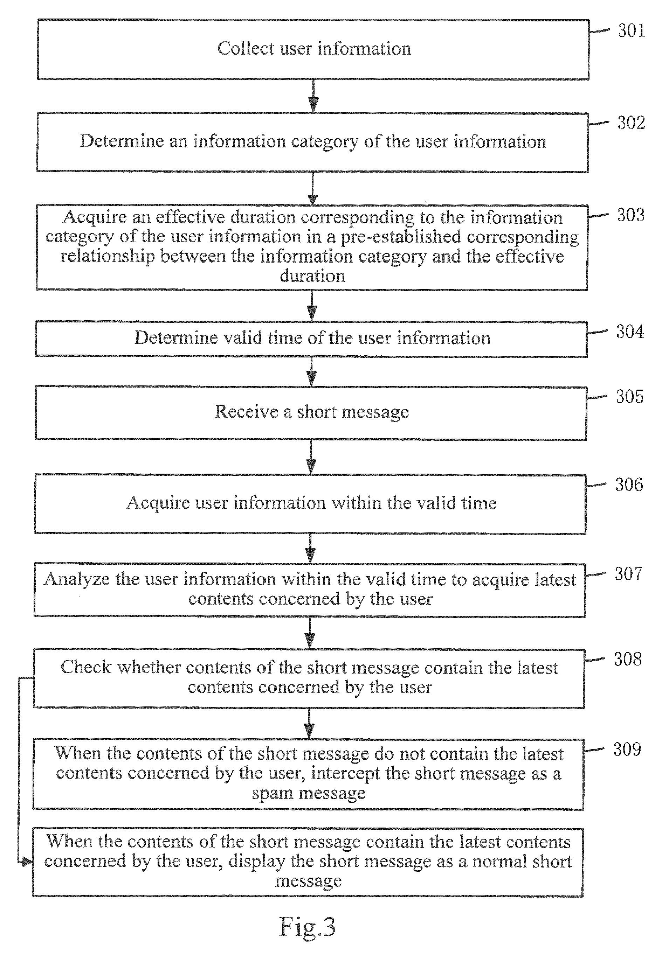

In a second implementation manner, the latest contents of concern to the user may be acquired according to newly collected user information, and the user information may be collected and acquired from a terminal device receiving the short message (refer to the method for processing a short message as shown in Fig. 2 and Fig. 3 for details). In step S103, contents of the short message are checked whether to contain the latest contents of concern to the user.

When the contents of the short message do not contain the latest contents of concern to the user, step S104 is performed. When the contents of the short message contain the latest contents of concern to the user, the short message is displayed as a normal short message.

In step S104, the short message is intercepted as a spam message.

According to the embodiment of the present disclosure, the short message is received, the latest contents of concern to the user are determined, the contents of the short message are checked whether to contain the latest contents of concern to the user, and when the contents of the short message do not contain the latest contents of concern to the user, the short message is intercepted as the spam message; in this way, whether the short message is a spam message can be determined according to the latest contents of concern to the user, so that the determination effect is more accurate, treating short messages which are unnecessary for the user as normal short messages can be avoided, and the service quality of a terminal device supplier is improved.

Fig. 2 is a method for processing a short message according to an exemplary embodiment, which is applicable to a terminal device. In the embodiment of the present disclosure, how to acquire latest contents of concern to a user according to user information will be described in detail. Referring to Fig. 2, the method includes the following steps.

In step S201, the user information is collected in real time.

The user information is configured to determine the contents of concern to the user, and the contents of concern to the user may be information interesting to the user. To be specific, the user information may be collected from the terminal device. Lots of user information will be generated while the user uses the terminal device. The user information may include at least one of position information of the terminal device, information inputted on the terminal device and usage information of an application installed on the terminal device.

The usage information of the application installed on the terminal device may include a name of the used application and search information corresponding to a webpage opened in the application. Provided that the used application includes "KUAIDI Taxi", then the name of the used application includes "KUAIDI Taxi". Provided that the used application includes a shopping application, and the user browses a webpage including search information of "Black jeans" in the shopping application, then the search information corresponding to the webpage opened in the application is "Black jeans". In that way, the usage information of the application installed on the terminal device may include "KUAIDI Taxi" and "Black jeans".

The position information of the terminal device includes country and city information, for example, "Yangzhou, China". The position information of the terminal device may be acquired through a positioning device on the terminal device.

The information inputted on the terminal device may be acquired through input method software installed on the terminal device.

During implementations, the user information may be acquireddirectly, or be acquired by means of reporting by application. When the user information is acquireddirectly, the usage information of the application may be acquired from an application management of the terminal device, the information inputted by the user may be acquired from the input method software, and the position information of the terminal device may be acquired from the positioning device on the terminal device. When the user information is acquired by means of reporting by the application, the terminal device may provide one application programming interface (referred to as API), and each application installed on the terminal device may report the usage information of the application through the API.

In step S202, a short message is received.

The short message may be sent to the terminal device by a certain mobile phone, or be sent to the terminal device by a certain mobile phone via a synchronization server.

In step S203, user information collected within a predetermined duration before the time of receiving the short message is acquired.

The predetermined duration may be set in advance, for example, 72 hours. For example, in the case the time of receiving the short message is 3pm on July 24, then the latest contents of concern to the user refer to the user information collected during a period from 3pm on July 21 to 3pm on July 24.

In step S204, the user information collected within the predetermined duration before the time of receiving the short message is analyzed to acquire the latest contents of concern to the user.

To be specific, the analysis method includes extracting nouns from the user information collected within the predetermined duration before the time of receiving the short message. For instance, provided that the user information collected within the predetermined duration before the time of receiving the short message includes "KUAIDI Taxi", "Black jeans", "Yangzhou, China" and "How to purchase funds", then the extracted nouns may include "Taxi", "Jeans", "Yangzhou" and "Funds". After extracting the nouns, the extracted nous can be used as the latest contents of concern to the user.

In step S205, contents of the short message are checked as to whether they contain the latest contents of concern to the user.

When the contents of the short message do not contain the latest contents of concern to the user, step S206 is performed. When the contents of the short message contain the latest contents of concern to the user, the short message is displayed as a normal short message.

The checking whether the contents of the short message contain the latest contents of concern to the user includes searching the latest contents of concern to the user in sequence from the contents of the short message. When at least one latest content of concern to the user is searched out, then the short message is displayed as a normal short message; and when no latest content of concern to the user is searched out, step S205 is performed.

Provided that the latest contents of concern to the user include "Yangzhou", "Funds" and "Taxi", when the received short message is "Welcome to Yangzhou in March! To facilitate your travel, please download Yangzhou Tourism Guide at http://yz3g.mobi/cs; each user purchasing a train ticket will enjoy a discount of 10%, and each account will enjoy a maximum rebate of 50 yuan. Act quickly! Please query 4008011888 for details, and click http://yz3g.mobi/bestpay for more concessions", "Yangzhou" can be searched out from the contents of the short message, and the short message is displayed as a normal short message. When the received short message is "[KUAIDI Taxi] Surprise every week and joy every day! Little KUAIKUAI gives a 16 yuan red envelope for taking taxi and invites you to become the majority happy people! KUAIDI Taxi hits the target at every shot, and will give you money while failing to take a taxi in every happy Friday!", "Taxi" may be searched out from the contents of the short message, and the short message is displayed as a normal short message. When the received short message is "Communication financing product "WOBAIFU" together launched by Guangdong Unicom, Baidu and Fullgoal Fund breaks through a 7d annual yield of 6% in recent days, and prepaying communication fee to participate communication fee financing will enjoy a maximum 3% of additional earnings, which enables you to pay easily and enjoy the wealth! You can order immediately by clicking http://8.gd10010.cn/. Because the quantity is limited, please purchase as soon as possible! [Guangdong Unicom]", "Funds" may be searched out from the contents of the short message, and the short message is displayed as a normal short message.

In step S206, the short message is intercepted as a spam message.

To be specific, when the contents of the short message do not contain the latest contents of concern to the user, the short message can be deleted, or the short message can be saved in a spam message file. The user may view the spam message file, and determine whether to delete the short message according to demands.

According to the embodiments of the present disclosure, the short message is received, the latest contents of concern to the user are determined, the contents of the short message are checked whether to contain the latest contents of concern to the user, and when the contents of the short message do not contain the latest contents of concern to the user, the short message is intercepted as the spam message; in this way, whether the short message is a spam message can be judged according to the latest contents of concern to the user, so that the judgment effect is more accurate, treating short messages which are unnecessary for the user as normal short messages can be avoided, and the service quality of a terminal device supplier is improved.

Fig. 3 is a method for processing a short message according to an exemplary embodiment, which is applicable to a terminal device. Compared with the method for processing a short message as shown in Fig. 2, although the method for processing a short message in Fig. 3 acquires the latest contents of concern to the user according to the user information similarly, the acquisition manners of the two are different. Referring to Fig. 3, the method includes the following steps.

In step S301, user information is collected.

Step S301 is identical to step S201 of the method for processing a short message as shown in Fig. 2, and will not be elaborated herein.

In step S302, an information category of the user information is determined.

After the user information is collected, the information category of the user information is determined.

In the embodiment, five information categories are provided, including food, clothes, tourist destination, used application and securities/fund/stock. In the user information, the information category of the position information of the terminal device may be the tourist destination; the information category of the name of the used application may be the used application; both the information category of the information inputted on the terminal device and the information category of the search information corresponding to the webpage opened in the application need to be determined according to the contents of the information, and may be food, clothes, tourist destination, or securities/fund/stock.

It should be illustrated that the foregoing five information categories are exemplary and explanatory only, and the information category is not limited to the foregoing five information categories.

In step S303, an effective duration corresponding to the information category of the user information in a pre-established corresponding relationship between the information category and the effective duration is acquired.

The present life pace of people is quick, and the contents of concern to the user can change at any time. In the embodiment of the present disclosure, the collected user information is time-limited. When the user has no interest in the information on a certain aspect in a certain period, a degree of importance of the information will be correspondingly reduced. According to statistics, the durations of time for the user to be interested in the user information within different information categories are different. The durations of time for food information are usually short, while the durations of time for stock information are usually long.

To be specific, the pre-established corresponding relationship between the information category and the effective duration may be as shown in the table below.

**Table 1**

| Information category | Effective duration |
|---|---|
| Food | 6 hours |
| Clothes | 1 week |
| Tourist destination | 2 weeks |
| Used application | 1 month |
| Securities/fund/stock | 3 months |

After the information category of the user information is determined, the effective duration corresponding to the information category of the user information may be determined according to Table 1.

In step S304, the valid time of the user information is determined.
the start time of the valid time of the user information is the time of collecting the user information, and the duration of the valid time of the user information is the effective duration corresponding to the information category of the user information.

In step S305, a short message is received.

Step S305 is identical to step S202 of the method for processing a short message as shown in Fig. 2, and will not be elaborated herein.

In step S306, user information within the valid time is acquired.

The start time of the valid time of the user information is the time of collecting the user information, and the duration of the valid time of the user information is the effective duration corresponding to the information category of the user information in a pre-established corresponding relationship between the information category and the effective duration.

In step S307, the user information within the valid time is analyzed to acquire the latest contents of concern to the user.

To be specific, an analysis method may include extracting nouns from the user information within the valid time to acquire the latest contents of concern to the user.

Because the effective durations of different information categories are different, for the user information with the same collecting time, the valid time of the user information under different information categories may also be different. The valid time of some user information is long, and the valid time of some user information is short. Compared to the method for processing a short message as shown in Fig. 2 which acquires the latest contents of concern to the user according to the user information collected within the predetermined duration before the time of receiving the short message, i.e., the effective durations of all the user information are the same when the collecting times are the same, the embodiment of the present disclosure acquires the latest contents of concern to the user according to the user information within the valid time; in this way, the effective duration of the user information is determined according to its information category when the collecting times are the same, which preferably complies with the mentality of the user, and is close to the actual need of the user.

In step S308, contents of the short message are checked as to whether they contain the latest contents of concern to the user.

When the contents of the short message do not contain the latest contents of concern to the user, step S309 is performed. When the contents of the short message contain the latest contents of concern to the user, the short message is displayed as a normal short message.

Step S308 is identical to step S205 of the method for processing a short message as shown in Fig. 2, and will not be elaborated herein.

In step S309, the short message is intercepted as a spam message.

Step S309 is identical to step S206 of the method for processing a short message as shown in Fig. 2, and will not be elaborated herein.

According to the embodiment of the present disclosure, the short message is received, the latest contents of concern to the user are determined, the contents of the short message are checked whether to contain the latest contents of concern to the user, and when the contents of the short message do not contain the latest contents of concern to the user, the short message is intercepted as the spam message; in this way, whether the short message is a spam message can be judged according to the latest contents of concern to the user, so that the judgment effect is more accurate, treating short messages which are unnecessary for the user as normal short messages can be avoided, and the service quality of a terminal device supplier is improved.

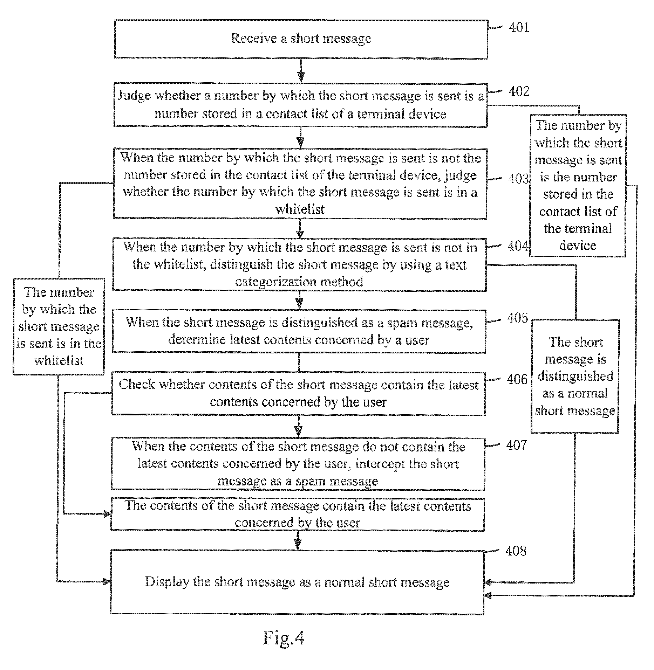

Fig. 4 is a method for processing a short message according to an exemplary embodiment, which is applicable to a terminal device. In the embodiment of the present disclosure, how to process a short message after receiving the short message and before checking whether contents of the short message contain latest contents of concern to the user will be described in detail. Referring to Fig. 4, the method includes the following steps.

In step 401, a short message is received.

After the short message is received, a number from which the short message is sent is acquired.

In step S402, the number from which the short message is sent is judged as to whether it is a number stored in a contact list of a terminal device.

When the number from which the short message is sent is not the number stored in the contact list of the terminal device, step S403 is performed; and when the number from which the short message is sent is the number stored in the contact list of the terminal device, step S408 is performed.

In step S403, the number from which the short message is sent is judged as to whether it is in a whitelist.

When the number from which the short message is sent is not in the whitelist, step S404 is performed. When the number from which the short message is sent is in the whitelist, step S408 is performed.

A plurality of numbers are stored in the whitelist, and the numbers stored in the whitelist may be different from those stored in the contact list. The user expects to receive short messages sent from the numbers stored in the whitelist.

Step S403 may also include judging whether the number from which the short message is sent is in a blacklist. When the number from which the short message is sent is in the blacklist, step S407 is performed. When the number from which the short message is sent is not in the blacklist, step S404 is performed. The user is unwilling to receive short messages sent from the numbers stored in the blacklist. The numbers stored in the blacklist may be different from the numbers stored in the contact list or in the whitelist. In step S404, the short message is distinguished using a text categorization method. When the short message is distinguished as a spam message, step S405 is performed. When the short message is distinguished as a normal short message, step S408 is performed.

The text categorization method may be a Naive Bayes categorization algorithm or other text categorization methods provided by the related art, and the text categorization method is not restricted in the embodiment.

In step S405, latest contents of concern to the user are determined.

Step S405 is identical to step S102 of the method for processing a short message as shown in Fig. 1, and will not be elaborated herein.

In step S406, contents of the short message are checked whether to contain the latest contents of concern to the user.

When the contents of the short message do not contain the latest contents of concern to the user, step S407 is performed. When the contents of the short message contain the latest contents of concern to the user, step S408 is performed.

Step S406 is identical to step S103 of the method for processing a short message as shown in Fig. 1, and will not be elaborated herein.

In step S407, the short message is intercepted as a spam message.

S407 is identical to step S104 of the method for processing a short message as shown in Fig. 1, and will not be elaborated herein.

In step S408, the short message is displayed as a normal short message.

According to the embodiment of the present disclosure, the short message is received, the latest contents of concern to the user are determined, the contents of the short message are checked whether to contain the latest contents of concern to the user, and when the contents of the short message do not contain the latest contents of concern to the user, the short message is intercepted as the spam message; in this way, whether the short message is a spam message can be judged according to the latest contents of concern to the user, so that the judgment effect is more accurate, treating short messages which are unnecessary for the user as normal short messages can be avoided, and the service quality of a terminal device supplier is improved.

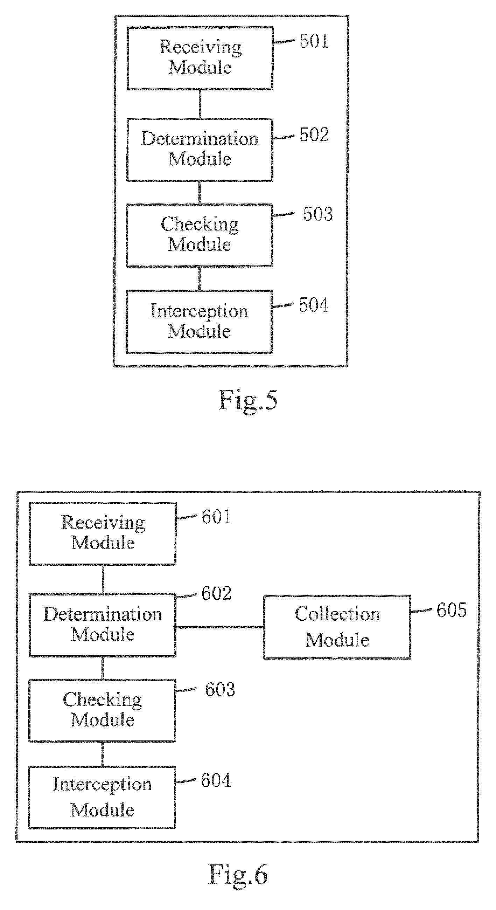

Fig. 5 is a block diagram illustrating a device for processing a short message, according to an exemplary embodiment. The device may be disposed in a terminal device, and is applicable to the method provided by any embodiment as shown in Fig. 1 to Fig. 4. Referring to Fig. 5, the device includes a receiving module 501, a determination module 502, a checking module 503 and an interception module 504.

The receiving module 501 is configured to receive a short message.

The determination module 502 is configured to determine latest contents of concern to the user.

The checking module 503 is configured to check whether contents of the short message contain the latest contents of concern to the user.

The interception module 504 is configured to, when the contents of the short message do not contain the latest contents of concern to the user, intercept the short message as a spam message.

According to the embodiment of the present disclosure, the short message is received, the latest contents of concern to the user are determined, the contents of the short message are checked whether to contain the latest contents of concern to the user, and when the contents of the short message do not contain the latest contents of concern to the user, the short message is intercepted as the spam message; in this way, whether the short message is a spam message can be judged according to the latest contents of concern to the user, so that the judgment effect is more accurate, treating short messages which are unnecessary for the user as normal short messages can be avoided, and the service quality of a terminal device supplier is improved.

Fig. 6 is a block diagram illustrating a device for processing a short message, according to an exemplary embodiment. The device may be disposed in a terminal device, and is applicable to the method provided by any embodiment as shown in Fig. 1 to Fig. 4. Referring to Fig. 6, the device includes a receiving module 601, a determination module 602, a checking module 603 and an interception module 604. The receiving module 601 and the interception module 604 are identical to the receiving module 501 and the interception module 504 in the device as shown in Fig. 5, and will not be elaborated herein, wherein the differences are as follows.

The latest contents of concern to the user determined by the determination module 602 are newly set by the user, or acquired according to newly collected user information, the user information being collected and acquired from a terminal device receiving the short message.

In an optional first implementation manner, the determination module 602 is configured to acquire the user information collected within a predetermined duration before the time of receiving the short message; and analyze the user information collected within the predetermined duration before the time of receiving the short message to acquire the latest contents of concern to the user.

In an optional second implementation manner, the determination module 602 is configured to acquire user information within a valid time, the start time of the valid time of the user information being the time of collecting the user information, and the duration of the valid time of the user information being an effective duration corresponding to an information category of the user information in a pre-established corresponding relationship between the information category and the effective duration; and analyze the user information within the valid time to acquire the latest contents of concern to the user.

In an optional third implementation manner, the device further includes a collection module 605, and the collection module 605 is configured to collect user information, the user information including at least one of position information of the terminal device, information inputted on the terminal device and usage information of an application installed on the terminal device.

In an optional fourth implementation manner, the usage information of the application installed on the terminal device includes a name of the used application and search information corresponding to a webpage opened in the application.

In an optional fifth implementation manner, the checking module 604 includes a judgment submodule and a checking submodule.

The judgment submodule is configured to judge whether the number from which the short message is sent is a number stored in a contact list of the terminal device.

The checking submodule is configured to, when the number from which the short message is sent is not the number stored in the contact list of the terminal device, check whether contents of the short message contain the latest contents of concern to the user. In an optional sixth implementation manner, the checking submodule is configured to, when the number from which the short message is sent is not the number stored in the contact list of the terminal device, judge whether the number from which the short message is sent is in a whitelist; and when the number from which the short message is sent is not in the whitelist, check whether the contents of the short message contain the latest contents of concern to the user.

In an optional seventh implementation manner, the checking submodule is configured to, when the number from which the short message is sent is not the number stored in the contact list of the terminal device, judge whether the number from which the short message is sent is in the whitelist; when the number from which the short message is sent is not in the whitelist, distinguish the short message using a text categorization device; and when the short message is distinguished as a spam message, check whether the contents of the short message contain the latest contents of concern to the user. With respect to the devices in the above embodiments, individual modules therein have been described relevantly in the embodiments regarding the methods, which will not be elaborated herein.

According to the embodiment of the present disclosure, the short message is received, the latest contents of concern to the user are determined, the contents of the short message are checked whether to contain the latest contents of concern to the user, and when the contents of the short message do not contain the latest contents of concern to the user, the short message is intercepted as the spam message; in this way, whether the short message is a spam message can be judged according to the latest contents of concern to the user, so that the judgment effect is more accurate, treating short messages which are unnecessary for the user as normal short messages can be avoided, and the service quality of a terminal device supplier is improved.

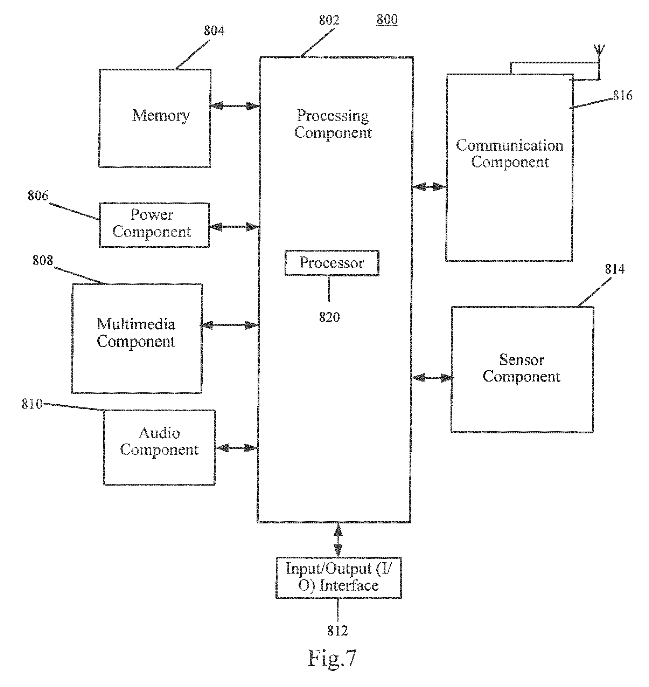

Fig. 7 is a block diagram illustrating a device 800 for processing a short message, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 7, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor. The sensor component 814 further includes a fingerprint sensor and a metal part. The metal part is disposed encircling the fingerprint sensor. The fingerprint sensor is configured to collect fingerprint character information; and the metal part is configured to collect touch instruction information.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing methods for application deletion reminding.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when an instruction in a storage medium is performed by a processor of a mobile terminal, enables the mobile terminal to perform a method for processing a short message, wherein the method includes: receiving a short message; determining latest contents of concern to a user; checking whether contents of the short message contain the latest contents of concern to the user; and when the contents of the short message do not contain the latest contents of concern to the user, intercept the short message as a spam message.

In an optional implementation manner, the latest contents of concern to the user are newly set by the user, or acquired according to newly collected user information, wherein the user information is collected and acquired from a terminal device receiving the short message.

In an optional implementation manner, the mobile terminal may also execute to acquire the user information collected within a predetermined duration before the time of receiving the short message; and analyze the user information collected within the predetermined duration before the time of receiving the short message to acquire the latest contents of concern to the user.

In an optional implementation manner, the mobile terminal may also execute to acquire user information within a valid time, the start time of the valid time of the user information being the time of collecting the user information, and the duration of the valid time of the user information being an effective duration corresponding to an information category of the user information in a pre-established corresponding relationship between the information category and the effective duration; and analyze the user information within the valid time to acquire the latest contents of concern to the user.

In an optional implementation manner, the mobile terminal may also execute to collect the user information, the user information including any least one of position information of the terminal device, information inputted on the terminal device and usage information of an application installed on the terminal device.

In an optional implementation manner, the usage information of the application installed on the terminal device includes a name of the used application and search information corresponding to a webpage opened in the application.

In an optional implementation manner, the mobile terminal may also execute to judge whether a number from which the short message is sent is a number stored in a contact list of a terminal device receiving the short message; and when the number from which the short message is sent is not the number stored in the contact list of the terminal device, check whether contents of the short message contain the latest contents of concern to the user.

In an optional implementation manner, the mobile terminal may also execute to, when the number from which the short message is sent is not the number stored in the contact list of the terminal device, judge whether the number from which the short message is sent is in a whitelist; and when the number from which the short message is sent is not in the whitelist, check whether the contents of the short message contain the latest contents of concern to the user.

In an optional implementation manner, the mobile terminal may also execute to, when the number from which the short message is sent is not in the whitelist, distinguish the short message using a text categorization method; and when the short message is distinguished as a spam message, check whether the contents of the short message contain the latest contents of concern to the user.

## Claims

1. A method for processing a short message, comprising:
receiving (101, 202, 305, 401) a short message;
determining (102) latest contents of concern to a user;
checking (103, 205, 308, 406) whether contents of the short message contain the latest contents of concern to the user; and
when the contents of the short message do not contain the latest contents of concern to the user, intercepting (104, 206, 309, 407) the short message as a spam message.

2. The method according to claim 1, wherein the latest contents of concern to the user are newly set by the user, or acquired according to newly collected user information, the user information being collected and acquired from a terminal device receiving the short message.

3. The method according to claim 2, wherein the determining (102) the latest contents of concern to the user comprises:
acquiring (203) user information collected within a predetermined duration before atime of receiving the short message; and
analyzing (204) the user information collected within the predetermined duration before the time of receiving the short message to acquire the latest contents of concern to the user.

4. The method according to claim 2, wherein the determining (102) the latest contents of concern to the user comprises:
acquiring (304) user information within a valid time, a start time of the valid time of the user information being time of collecting the user information, and a duration of the valid time of the user information being an effective duration corresponding to an information category of the user information in a pre-established corresponding relationship between the information category and the effective duration; and
analyzing (307) the user information within the valid time to acquire the latest contents of concern to the user.

5. The method according to claim 2, further comprising:
collecting (201) user information, the user information comprising at least one of position information of the terminal device, information inputted on the terminal device and usage information of an application installed on the terminal device.

6. The method according to claim 5, wherein the usage information of the application installed on the terminal device comprises a name of the used application and search information corresponding to a webpage opened in the application.

7. The method according to any one of claims 1 to 6, wherein the checking (406) whether the contents of the short message contain the latest contents of concern to the user comprises:
judging (402) whether a number from which the short message is sent is a number stored in a contact list of the terminal device receiving the short message; and
when the number from which the short message is sent is not a number stored in the contact list of the terminal device, checking whether the contents of the short message contain the latest contents of concern to the user.

8. The method according to claim 7, wherein the checking (406) whether the contents of the short message contain the latest contents of concern to the user comprises:
when the number from which the short message is sent is not a number stored in the contact list of the terminal device, judging (403) whether the number from which the short message is sent is in a whitelist; and
when the number from which the short message is sent is not in the whitelist, checking whether the contents of the short message contain the latest contents of concern to the user.

9. The method according to claim 8, wherein the checking (406) whether the contents of the short message contain the latest contents of concern to the user comprises:
when the number from which the short message is sent is not in the whitelist, distinguishing (404) the short message by using a text categorization method; and
when the short message is distinguished as a spam message, checking (405) whether the contents of the short message contain the latest contents of concern to the user.

10. A device for processing a short message, comprising:
a receiving module (501, 601) configured to receive a short message;
a determination module (502, 602) configured to determine latest contents of concern to a user;
a checking module (503, 603) configured to check whether contents of the short message contain the latest contents of concern to the user; and
an interception module (504, 604) configured to, when the contents of the short message do not contain the latest contents of concern to the user, intercept the short message as a spam message.

11. The device according to claim 10, wherein the latest contents of concern to the user which are determined by the determination module are newly set by the user, or acquired according to newly collected user information, the user information being collected and acquired from a terminal device receiving the short message.

12. The device according to claim 11, wherein the determination module (502, 602) is configured to:
acquire user information collected within a predetermined duration before a time of receiving the short message; and
analyze the user information collected within the predetermined duration before the time of receiving the short message to acquire the latest contents of concern to the user.

13. The device according to claim 11, wherein the determination module (502, 602) is configured to:
acquire user information within a valid time, a start time of the valid time of the user information being time of collecting the user information, and a duration of the valid time of the user information being an effective duration corresponding to an information category of the user information in a pre-established corresponding relationship between the information category and the effective duration; and
analyze the user information within the valid time to acquire the latest contents of concern to the user.

14. The device according to claim 11, further comprising a collection module (605),
the collection module (605) being configured to collect the user information, and the user information comprising at least one of position information of the terminal device, information inputted on the terminal device and usage information of an application installed on the terminal device.

15. A computer program, which when executing on a processor of a terminal device, performs a method according to any one of claims 1 to 9.
